(19) Europäisches Patentamt
European Patent Office
Office européen des brevets

(11) **EP 3 892 108 A1**

(12) **EUROPEAN PATENT APPLICATION**
published in accordance with Art. 153(4) EPC

(43) Date of publication:
**13.10.2021 Bulletin 2021/41**

(21) Application number: **18941994.8**

(22) Date of filing: **07.12.2018**

(51) Int Cl.:
**A23K 20/142** (2016.01)   **A23K 40/10** (2016.01)

(86) International application number:
**PCT/KR2018/015539**

(87) International publication number:
**WO 2020/116697 (11.06.2020 Gazette 2020/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **CJ Cheiljedang Corporation**
**Seoul 04560 (KR)**

(72) Inventors:
• **JUNG, Su Kwon**
  **Suwon-si, Gyeonggi-do 16509 (KR)**
• **KIM, Il Chul**
  **Seoul 06217 (KR)**

• **CHO, Seok Tae**
  **Seoul 07535 (KR)**
• **JO, Se Hee**
  **Seoul 04720 (KR)**
• **SEO, Yong Bum**
  **Suwon-si, Gyeonggi-do 16663 (KR)**
• **LEE, Seung Je**
  **Suwon-si, Gyeonggi-do 16503 (KR)**
• **LEE, In Sung**
  **Seoul 06270 (KR)**

(74) Representative: **J A Kemp LLP**
**14 South Square**
**Gray's Inn**
**London WC1R 5JJ (GB)**

(54) **GRANULAR FEED ADDITIVE**

(57)   The present disclosure relates to a granular feed additive capable of reducing hygroscopicity and lumping and caking, the additive including a basic amino acid and an anion represented by Formula 1, wherein a molar ratio of the anion to the basic amino acid is greater than 0.1 and equal to or less than 0.52.

[FIG.1]

EP 3 892 108 A1

**Description**

TECHNICAL FIELD

The present disclosure relates to a granular feed additive including a basic amino acid and an anion represented by Formula 1 and capable of reducing hygroscopicity and lumping and caking phenomena, wherein a molar ratio of the anion to the basic amino acid is greater than 0.1 and equal to or less than 0.52.

BACKGROUND ART

Feed additives are products intended to be consumed as supplements to a conventional diet to overcome a lack of daily intake of certain compounds. To improve animal husbandry performance of farm animals, it is common to enhance feed additives of farm animals with amino acids.

Since amino acids for feed additives produced by microorganism fermentation are present with other by-products in a broth, various methods of increasing the amino acid content are used. For example, to increase the amino acid content, granules may be prepared by mixing a purified high-content amino acid aqueous solution with a broth. However, in the case of a high-content basic amino acid aqueous solution, hydrophilicity and polarity thereof cause high hygroscopicity, and lumping and caking phenomena of the final granulated product. Such lumping and caking phenomena are not suitable for a processing process that is technically required in a mixed feed factory. In addition, to increase the basic amino acid content, various purification processes for removing impurities in the broth and crystallization processes with the addition of hydrochloric acid may be used. Although high-content feed additives may be prepared in this way, a number of purification processes are required, and essential reagents need to be discharged into the waste after use, resulting in economic and environmental problems.

Accordingly, there is a need for an economical way of developing granular feed additives including a high content of basic amino acids and having low hygroscopicity.

DESCRIPTION OF EMBODIMENTS

TECHNICAL PROBLEM

The present disclosure is to provide a granular feed additive including a basic amino acid and an anion represented by Formula 1 below and having an effect of preventing hygroscopicity and lumping and caking phenomena, wherein a molar ratio of the anion to the basic amino acid is greater than 0.1 and equal to or less than 0.52.

$$[Formula\ 1] \qquad H_nCO_3^{(2-n)-}$$

(wherein n in Formula 1 is 0 or 1).

SOLUTION TO PROBLEM

An aspect of the present disclosure may provide a granular feed additive including a basic amino acid and an anion represented by Formula 1 below, wherein a molar ratio of the anion to the basic amino acid is greater than 0.1 and equal to or less than 0.52.

$$[Formula\ 1] \qquad H_nCO_3^{(2-n)-}$$

(wherein n in Formula 1 is 0 or 1).

The granular feed additive according to an aspect may include a high-content basic amino acid, and also may include an anion represented by Formula 1 by injection of carbon dioxide, so as to reduce polarity of the basic amino acid. Accordingly, problems of hygroscopicity and lumping and caking phenomena caused by the polarity of the basic amino acid may be effectively reduced.

The term "feed additive" as used herein refers to a substance added to feed for the improvement of productivity or the promotion of health of a target organism. The feed additive may be prepared in various forms known in the related art, and may be used individually or in combination with a conventionally known feed additive. The feed additive may be added to feed at an appropriate composition ratio, wherein such a composition ratio may be easily determined in view of the common knowledge and experience in the related art. The feed additive may be added to feeds of animals, such as chickens, pigs, monkeys, dogs, cats, rabbits, cows, sheep, goats, and the like, but embodiments of the present disclosure are not limited thereto.

In one embodiment, the feed additive may be a granular type.

In one embodiment, such a granular feed additive may include a basic amino acid. The term "basic amino acid" as used herein may include at least one selected from lysine, arginine, and histidine. The basic amino acid may include at least one selected from L-lysine, L-arginine, and L-histidine. The basic amino acid may be in the form of a salt or free amino acid of each of lysine, arginine, and histidine. The salt may be sulfate, hydrochloride, or carbonate, but embodiments of the present disclosure are not limited thereto.

The basic amino acid may easily bind to water, and may be polar. Thus, in general, when the basic amino acid is included in the granular feed additive in a high content, the polarity of the granule may increase, leading to increased occurrence of problems of hygroscopicity and lumping and caking phenomena. The granular feed additive may include the basic amino acid in a range of about 50 weight% to about 90 weight%, for example, about 55 weight% to about 89.5 weight%, about 60 weight% to about 89 weight%, about 65 weight% to about 88.5 weight%, about 70 weight% to about 88 weight%, about 75 weight% to about 87 weight%, about 76 weight% to about 86 weight%, about 77 weight% to about 85 weight%, about 78 weight% to about 84 weight%, or about 79 weight% to about 80 weight%, based on the total weight of the granular feed additive. That is, the granular feed additive may include the basic amino acid in a high content, and by including the basic amino acid within the ranges above, advantages in transportation and storage may be resulted. The granular feed additive may achieve such a high content property by using an amino acid aqueous solution which is prepared by purifying and concentrating a fermentation broth. In addition, by mixing the amino acid aqueous solution with the concentrated broth, a content of the amino acid in the resulting solution may be adjusted, and accordingly, a content of the amino acid included in the feed additive may be also adjusted within an appropriate range.

In one embodiment, the granular feed additive may include the anion represented by Formula 1 below:

[Formula 1] $\qquad H_nCO_3^{(2-n)-}$

(wherein n in Formula 1 is 0 or 1).

The anion represented by Formula 1 may include, particularly, a bicarbonate ion ($HCO_3^-$) or a carbonate ion ($CO_3^{2-}$).

The anion may be generated by adding carbon dioxide to an aqueous solution containing the basic amino acid. The carbon dioxide may react with a hydrogen ion in the aqueous solution to generate a carbonate ion, which may be then converted to a bicarbonate ion. In this process, a pH of the granular feed additive may be reduced or neutralized. Thus, in one embodiment, the granular feed additive may include a carbonate ion, a bicarbonate ion, or a mixture thereof.

In one embodiment, a molar ratio of the anion to the basic amino acid may be greater than 0.1 and equal to or less than 0.52. The term "molar ratio of the anion to the basic amino acid" as used herein may refer to a molar ratio of the bicarbonate ion or the carbonate ion to the basic amino acid, and may be represented by $HCO_3^-$/basic amino acid or $CO_3^{2-}$/basic amino acid.

In the feed additive, the molar ratio of the bicarbonate ion or the carbonate ion to the basic amino acid may be greater than 0.1 and equal to or less than 0.52.

When the molar ratio is about 0.1 or less, a content of the bicarbonate ion or the carbonate ion in the granule is low so that an effect of neutralizing the basic amino acid may be weakened, causing problems of hygroscopicity or solidification problems of the granule. When the molar ratio is greater than about 0.52, the amino acid content of the granule may be lowered, resulting in less product value. That is, the granular feed additive may have improved hygroscopicity compared to a granular feed additive including no bicarbonate ion or carbonate ion. The term "hygroscopicity" as used herein refers to the tendency of absorbing moisture or moisturizing. A typical granular feed additive, particularly, a granular feed additive including a basic amino acid, may exhibit high hygroscopicity, which causes increased lumping and caking phenomena, resulting in low product value. However, according to the present disclosure, a product value of the feed additive may be improved.

The molar ratio may be, particularly, in a range of about 0.15 to about 0.5, or about 0.2 to about 0.45.

The molar ratio may be calculated according to results obtained by high performance liquid chromatography (HPLC) after dissolving the granule in water. However, embodiments of the present disclosure are not limited thereto.

A size of the granule included in the granular feed additive may be determined according to animal husbandry use.

In one embodiment, an average diameter of granules of the granular feed additive may be in a range of about 0.1 mm to about 3.0 mm. In one or more embodiments, the average diameter of the granule may be in a range of about 0.5 mm to about 3.0 mm. However, modifications are possible within a range that is not beyond the object of the present disclosure. When the average diameter of the granules of the granular feed additive is less than about 0.1 mm, the degree of solidification may increase, or dust may be generated. When the average diameter of the granules of the granular feed additive is greater than about 3.0 mm, the granule may be mixed unevenly during the preparation of the feed.

The granules of the granular feed additive may have an irregular shape, and for example, may have a spherical shape.

In one embodiment, when the molar ratio of the bicarbonate ion or the carbonate ion to the basic amino acid is greater than 0.1 and equal to or less than 0.52, the hygroscopicity may be improved while the lumping and caking phenomena may be reduced. Thus, by adjusting the molar ratio to be greater than 0.1 and equal to or less than 0.52, the granular feed additive having improved hygroscopicity may be provided.

In one embodiment, the pH of the granular feed additive may be in a range of about 8.5 to about 9.5. In one or more embodiments, the pH of the granular feed additive may be in a range of about 8.5 to about 9.2. The pH may be reduced by the injection of carbon dioxide during the fermentation process.

In one embodiment, a moisture content of the granular feed additive may be less than about 7 weight% based on the total weight of the granular feed additive. For example, the moisture content of the granular feed additive may be from about 0.1 weight% to about 7 weight%. The present disclosure provides the granular feed additive including the basic amino acid and the anion represented by Formula 1, wherein the molar ratio of the anion to the basic amino acid is set to be greater than about 0.1 and equal to or less than 0.52, thereby improving the hygroscopicity, and accordingly, including only a small content of moisture within a moisture content range described above.

The granular feed additive of the present disclosure may be prepared according to the following method. In one embodiment, the granular feed additive may be prepared by the steps of: preparing a basic amino acid aqueous solution; preparing a neutralized amino acid aqueous solution; concentrating a broth; preparing a mixed amino acid solution containing the neutralized amino acid aqueous solution and the concentrated broth; and granulating the mixed amino acid solution.

In one or more embodiments, the granular feed additive may be prepared by the steps of: preparing a basic amino acid aqueous solution; concentrating a broth; preparing a neutralized amino acid aqueous solution; preparing a mixed amino acid solution containing the neutralized amino acid aqueous solution and the concentrated broth; and granulating the mixed amino acid solution.

In one embodiment, the term "amino acid aqueous solution" as used herein may refer to a purified broth containing the basic amino acid. In detail, the amino acid aqueous solution may be obtained by processes of filtering, purifying, and concentrating a fermentation product which is obtained by culturing a basic amino acid-producing strain.

The fermentation product may be achieved by culturing upon fermentation of the strain, and may be performed by a fed-batch process, a feed process, a batch process (also referred to as a batch cultivation), or a repeated fed batch process (also referred to as a repeated feed process). A fermentation medium used herein may be optimized according to the requirements of the producing strain. The amino acid aqueous solution may have the following characteristics: concentration of about 560 g/L to 640 g/L, pH of about 10.2 to about 10.7, weight of about 1.13 to about 1.14, and purity of about 95 weight% to about 99 weight%.

In this preparation method, the basic amino acid-producing strain is not particularly limited as long as it is a strain producing a basic amino acid within a range that is not beyond the object of the present disclosure. For example, the basic amino acid-producing strain may include a strain of the genus Corynebacterium.

In addition, conditions that the strain produces the basic amino acid may include conditions in which a production amount of the basic amino acid is high, but an accumulation amount of the strain is small.

The fermentation product may be filtered, or specifically, a microorganism therein may be separated by using a membrane. Then, the broth from which the microorganism is removed may pass through, particularly for example, an ion exchange resin tower, so as to remove impurities and purify the basic amino acid. A process of concentration of the purified amino acid may be performed by, for example, vacuum and/or drying processes on the broth containing the basic amino acid.

The term "neutralized amino acid aqueous solution" as used herein may refer to a form in which the amino acid aqueous solution is neutralized. In detail, the neutralized amino acid aqueous solution may further contain $HCO_3^-$ or $CO_3^{2-}$ in the amino acid aqueous solution. That is, the neutralized amino acid aqueous solution may be in a form in which the amino acid aqueous solution is neutralized by $HCO_3^-$ or $CO_3^{2-}$.

In the step of neutralizing the amino acid aqueous solution, the neutralization may be performed by adding carbon dioxide to the amino acid aqueous solution. The carbon dioxide may be generated in the fermentation process of the microorganism. When carbon dioxide is injected to the amino acid aqueous solution, $HCO_3^-$ or $CO_3^{2-}$ may be generated in the aqueous solution so that the basic amino acid may be neutralized. According to this method, carbon dioxide generated during the fermentation may be used, and accordingly, the discharge of carbon dioxide is reduced and resources may be recycled.

In addition, since a conventional process using hydrochloric acid used for the neutralization of the amino acid aqueous solution may be omitted, a process of purification may be simplified.

The neutralized amino acid aqueous solution may have the following characteristics: pH of about 8.9 to about 9.5, weight of about 1.18 to about 1.20, and purity of about 82 weight% to about 89 weight%.

The "step of concentrating the broth" may refer to concentration of the broth of a fermentation medium after separation of the basic amino acid from the fermentation medium. In one embodiment, the "concentrated broth" may refer to a broth containing the basic amino acid and concentrated through vacuum and/or drying processes. The concentrated broth may be obtained by a process of concentration in the vacuum and heated state performed on the fermentation product, which is obtained by culturing the basic amino acid-producing strain, without a process of purification, so that the total solid contents in the fermentation product is set to be in a range of about 50 weight% to about 60 weight%, that is, the solid content is set to be in a range of about 50 weight% to about 60 weight%. The "solid content" may refer to the mass of solids remained upon the complete removal of liquid.

In one embodiment, the step of preparing the mixed amino acid solution containing the amino acid aqueous solution and the concentrated broth may be performed by mixing the amino acid aqueous solution with the concentrated broth at room temperature. In the mixing, a molar ratio of the anion to the mixed solution may be about 0.15 or more and about 0.65 or less. In one embodiment, the step of granulating the mixed amino acid solution may be performed by, for example, continuously spraying the amino acid aqueous solution or the concentrated broth into a granulator, and continuously supplying hot air to the granulator to form a fluidized bed of particles formed by the spraying within a constant size range. For this process, a conventional fluidized bed circulation granulator or the like may be used. Conditions for the granulation may include, for example, an injection speed of about 5 mL/min to about 10 mL/min, a nozzle pressure of about 1.2 kg/cm$^2$, a temperature of about 75 °C to about 80 °C. However, embodiments of the present disclosure are not limited thereto.

The granular feed additive may be suitable for use in the preparation of animal feeds. For example, the feed additive may be a part of the animal feed premix or a precursor of the animal feed, and the feed additive itself may be mixed with a feed material.

The granular feed additive may be administered to an animal alone or in combination with other feed additives in an edible carrier. In addition, the feed additive may be administered as a topdressing material to an animal, may be directly mixed with animal feeds, or may be administered to an animal in an oral formulation separate from the feeds.

ADVANTAGEOUS EFFECTS OF DISCLOSURE

The granular feed additive according to an embodiment includes a high-content basic amino acid and is also capable of preventing hygroscopicity and lumping and caking phenomena caused by the basic amino acid.

In addition, regarding the granular feed additive according to an embodiment, a process using hydrochloric acid, which is generally used to neutralize the basic amino acid, may be omitted. Thus, the process may be simplified and process problems caused by the use of hydrochloric acid may be solved.

BRIEF DESCRIPTION OF DRAWINGS

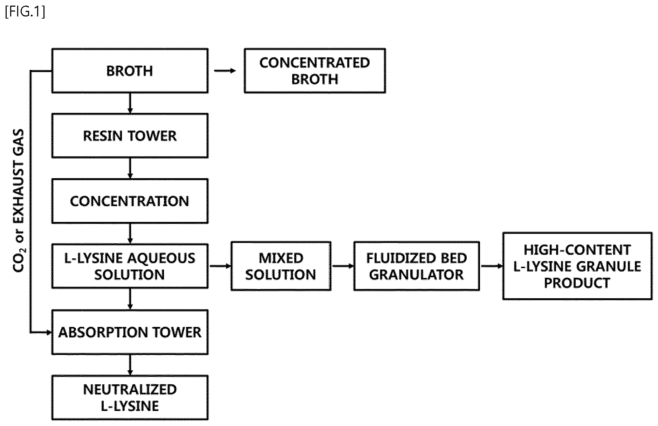

FIG. 1 is a diagram showing steps of preparing a granular feed additive according to an embodiment.

MODE OF DISCLOSURE

Hereinafter, the present disclosure will be described in more detail with reference to Examples. However, these Examples are for illustrative purposes only, and the scope of the present disclosure is not limited to these Examples.

Examples 1 to 6 and Comparative Examples 1 to 6

FIG. 1 is a diagram showing steps of preparing a granular feed additive including a high-content basic amino acid according to an embodiment. Hereinafter, each step will be described in detail with reference to FIG. 1.

1. Preparation of mixed amino acid solution

An amino acid aqueous solution and a concentrated broth were prepared according to compositions shown in Tables 1 and 2, and then, were mixed to prepare a mixed solution. In this Example, L-lysine was used as an example of the basic amino acid. Comparative Examples 1 to 6 were performed in the same manner as in Example 1, except that a L-lysine aqueous solution was used instead of a neutralized L-lysine aqueous solution. First, an amino acid aqueous solution was prepared by purifying a broth containing L-lysine. To prepare the broth, a starter culture of a L-lysine-producing strain of the genus Corynebacterium was performed for 20 hours in 25 mL of a seed medium at pH 7.0 at a speed of 200 rpm at a temperature of 30 °C. Here, the seed medium was supplemented with, based on 1 L of distilled water, 20 g of glucose, 10 g of peptone, 5 g of yeast extract, 1.5 g of urea, 4 g of $KH_2PO_4$, 8 g of $K_2HPO_4$, 0.5 g of $MgSO_4 \cdot 7H_2O$, 100 $\mu$g of biotin, 1 mg of thiamine HCI 1, 2 mg of calcium-pantothenic acid, and 2 mg of nicotinamide. A starter obtained by the seed culture was inoculated at 4 % (v/v) into a producing medium at pH 7.0 and, while sufficiently ventilating and stirring the medium, the medium was cultured until glucose added thereto was completely consumed, thereby obtaining a final broth. Here, the producing medium was supplemented with, based on 1 L of distilled water, 100 g of glucose, 40 g of $(NH_4)_2SO_4$, 2.5 g of soybean protein, 5 g of corn steep solids, 3 g of urea, 1 g of $KH_2PO_4$, 0.5 g of $MgSO_4 \cdot 7H_2O$, 100 $\mu$g of biotin, 1 mg of thiamine HCl, 2 mg of calcium-pantothenic acid, 3 mg of nicotinamide, and 30 g of $CaCO_3$. After the completion of the culture, a concentration of the L-lysine in the broth was analyzed using HPLC (Waters Company, 2478). A microorganism in the broth was removed by using a membrane having a size of 0.1 $\mu$m. The broth from which the microorganism was removed passed through a cation exchange resin tower to absorb L-lysine in the broth and to separate the L-lysine from other impurities. The absorbed L-lysine was desorbed from the resin tower using about 2 N ammonia solution, recovered, and then, heated and concentrated in vacuum, thereby preparing a L-lysine aqueous solution. After the concentration, the L-lysine aqueous solution had a concentration of 560 g/L, a pH of 10.2, a weight of 1.13, and purity of 99 weight%. In the neutralized L-lysine aqueous solution, gas containing 5 volume% of carbon dioxide was injected at a temperature of 50 °C for 10 hours at a rate of 1,000 L/min at 500 rpm after 35 kg of the L-lysine aqueous solution was added to a neutralization tank. The concentrations of the neutralized L-lysine and the bicarbonate ion or carbonate ion following the injection of the carbon dioxide were analyzed using HPLC (Waters Company, 2478). The neutralized L-lysine aqueous solution was the one further containing $HCO_3$- or $CO_3^{2-}$ to the L-lysine aqueous solution. The neutralized L-lysine aqueous solution had a pH of 8.9, a specific gravity of 1.20, and purity of 89 weight%.

The concentrated broth was prepared by heating and concentrating the broth prepared as described above in a vacuum without performing a purification process. Then, a content of the total solids in the broth after the concentration was set to be 56 weight%.

The L-lysine aqueous solution or the neutralized L-lysine aqueous solution was mixed with the concentrated broth according to the ratios specified in Tables 1 and 2, thereby preparing a mixed solution. Concentrations of the L-lysine and $HCO_3^-$ or $CO_3^{2-}$ in the mixed solution were analyzed using HPLC (Waters Company, 2478). Referring to the results of the concentration analysis, results of calculating a molar ratio of $HCO_3^-$ to the L-lysine in the mixed solution in each of Examples 1 to 6 and Comparative Examples 1 to 6 were shown in Tables 1 and 2.

[Table 1]

| | Example 1 | | Example 2 | | Example 3 | | Example 4 | | Example 5 | | Example 6 | |
|---|---|---|---|---|---|---|---|---|---|---|---|---|
| | Neutralized L-lysine aqueous solution | Concentrated broth | Neutralized L-lysine aqueous solution | Concentrated broth | Neutralized L-lysine aqueous solution | Concentrated broth | Neutralized L-lysine aqueous solution | Concentrated broth | Neutralized L-lysine aqueous solution | Concentrated broth | Neutralized L-lysine aqueous solution | Concentrated broth |
| Ratio of lysine in mixed solution (%) | 100 | 0 | 90 | 10 | 80 | 20 | 70 | 30 | 60 | 40 | 55 | 45 |
| Molar ratio of $HCO_3^-$/L-lysine in mixed solution | 0.62 | | 0.54 | | 0.43 | | 0.32 | | 0.27 | | 0.19 | |

EP 3 892 108 A1

EP 3 892 108 A1

[Table 2]

| | Comparative Example 1 | | Comparative Example 2 | | Comparative Example 3 | | Comparative Example 4 | | Comparative Example 5 | | Comparative Example 6 | |
|---|---|---|---|---|---|---|---|---|---|---|---|---|
| | L-lysine aqueous solution | Concentrated broth | L-lysine aqueous solution | Concentrated broth | L-lysine aqueous solution | Concentrated broth | L-lysine aqueous solution | Concentrated broth | L-lysine aqueous solution | Concentrated broth | L-lysine aqueous solution | Concentrated broth |
| Ratio of lysine in mixed solution (%) | 100 | 0 | 90 | 10 | 80 | 20 | 70 | 30 | 60 | 40 | 55 | 45 |
| Molar ratio of $HCO_3^-$/L-lysine in mixed solution | 0.04 | | 0.02 | | 0.02 | | 0.05 | | 0.03 | | 0.02 | |

As shown in Table 1, as the ratio of the L-lysine aqueous solution increased, the molar ratio of $HCO_3^-$/L-lysine in the mixed solution decreased. As shown in Table 2, there was no significant change in the molar ratio of $HCO_3^-$/L-lysine in the mixed solution according to the change in the ratio of the L-lysine aqueous solution.

2. Preparation of granule

The mixed solution specified in Tables 1 and 2 was then granulated. In detail, the prepared mixed solution was sprayed to be injected into a fluidized bed circulation granulator at a rate of 5 mL/min and at a nozzle pressure of 1.2 kg/cm$^2$ at a temperature of 80 °C. By separation, the prepared granule was selected according to a size from about 0.5 mm to about 3.0 mm.

2.1. Analysis of molar ratio of $HCO_3^-$ to L-lysine in granule and content of L-lysine

To analyze the molar ratio of $HCO_3^-$ to the L-lysine and the content of the L-lysine in the granule of each of Examples 1 to 6 and Comparative Examples 1 to 6, a small content of the granule was dissolved in 1L of ultrapure water. Then, HPLC (Waters Company, 2478) was performed thereon, and the molar ratio was calculated from the results. Results of the calculation were shown in Tables 3 and 4.

[Table 3]

| Items | Example 1 | | Example 2 | | Example 3 | | Example 4 | | Example 5 | | Example 6 | |
|---|---|---|---|---|---|---|---|---|---|---|---|---|
| | Neutralized L-lysine aqueous solution | Concentrated broth | Neutralized L-lysine aqueous solution | Concentrated broth | Neutralized L-lysine aqueous solution | Concentrated broth | Neutralized L-lysine aqueous solution | Concentrated broth | Neutralized L-lysine aqueous solution | Concentrated broth | Neutralized L-lysine aqueous solution | Concentrated broth |
| | 100 | 0 | 90 | 10 | 80 | 20 | 70 | 30 | 60 | 40 | 55 | 45 |
| pH of granule (5 weight%) | 9.2 | | 9.2 | | 9.0 | | 8.9 | | 8.8 | | 8.7 | |
| Content of L-lysine (%) | 81.6 | | 80.1 | | 80.6 | | 79.5 | | 79.3 | | 79.7 | |
| Molar ratio of $HCO_3^-$/L-lysine in granule | 0.52 | | 0.47 | | 0.36 | | 0.25 | | 0.14 | | 0.10 | |

EP 3 892 108 A1

[Table 4]

| Items | Comparative Example 1 | | Comparative Example 2 | | Comparative Example 3 | | Comparative Example 4 | | Comparative Example 5 | | Comparative Example 6 | |
|---|---|---|---|---|---|---|---|---|---|---|---|---|
| | L-lysine aqueous solution | Concentrated broth | L-lysine aqueous solution | Concentrated broth | L-lysine aqueous solution | Concentrated broth | L-lysine aqueous solution | Concentrated broth | L-lysine aqueous solution | Concentrated broth | L-lysine aqueous solution | Concentrated broth |
| | 100 | 0 | 90 | 10 | 80 | 20 | 70 | 30 | 60 | 40 | 55 | 45 |
| pH of granule(5 weight%) | 10.2 | | 10.1 | | 9.8 | | 9.6 | | 9.4 | | 9.3 | |
| Content of L-lysine (%) | 98.4 | | 94.2 | | 90.2 | | 86.6 | | 83.2 | | 81.7 | |
| Molar ratio of $HCO_3^-$/L-lysine in granule | 0.02 | | 0.03 | | 0.03 | | 0.03 | | 0.02 | | 0.02 | |

As shown in Tables 3 and 4, it was confirmed that the molar ratio of $HCO_3^-$ to the L-lysine in the granule was in a range of 0.1 to 0.52 in Examples 1 to 6 and in a range of 0.02 to 0.03 in Comparative Examples 1 to 6. In addition, the content of the L-lysine was confirmed to be 78 % or more in all of Examples 1 to 6 and Comparative Examples 1 to 6, and accordingly, it was confirmed that the content was high.

2.2 Evaluation of hygroscopicity and solidification

To evaluate hygroscopicity and solidification of the granules of Examples 1 to 6 and Comparative Examples 1 to 6, 3 g of each of the granules was placed in a disposable mass plate and stored for one week at a temperature of 40°C and 60 % of relative humidity. Then, changes in moisture in the granule were measured through mass change.

Additionally, to quantitatively evaluate lumping and caking phenomena (i.e., solidification) of the water-absorbed granules, the granules were placed on a sieve having a mesh size of 1.7 mm, and then, a vibrator was used so that the mass of granules filtered out of the sieve was measured after vibration (50 Hz, 5 minutes) to determine the degree of lumping and caking. The degree of lumping and caking was calculated by the following equation.

$$\text{DEGREE OF LUMPING AND CAKING (\%)} = \frac{\text{TOTAL WEIGHT OF GRANULES} - \text{WEIGHT OF GRANULES FILTERED OUT OF SIEVE}}{\text{TOTAL WEIGHT OF GRANULES}} \times 100$$

Results are shown in Tables 5 and 6.

[Table 5]

| Items | Example 1 | | Example 2 | | Example 3 | | Example 4 | | Example 5 | | Example 6 | |
|---|---|---|---|---|---|---|---|---|---|---|---|---|
| | Neutralized L-lysine aqueo us solutio n | Conce ntrated broth | Neutralized L-lysine aqueo us solutio n | Conce ntrated broth | Neutralized L-lysine aqueo us solutio n | Conce ntrated broth | Neutralized L-lysine aqueo us solutio n | Conce ntrated broth | Neutralized L-lysine aqueo us solutio n | Conce ntrated broth | Neutra lized L-lysine aqueo us solutio n | Conc entrat ed broth |
| | 100 | 0 | 90 | 10 | 80 | 20 | 70 | 30 | 60 | 40 | 55 | 45 |
| Moisture content after 1 week (%) | 2.7 | | 3.7 | | 4.4 | | 5.4 | | 5.7 | | 6.9 | |
| The degree of lumping and caking after 1 week | 1.9 | | 2.1 | | 2.0 | | 3.2 | | 2.9 | | 45.2 | |

[Table 6]

| Items | Comparative Example 1 | | Comparative Example 2 | | Comparative Example 3 | | Comparative Example 4 | | Comparative Example 5 | | Comparative Example 6 | |
|---|---|---|---|---|---|---|---|---|---|---|---|---|
| | L-lysine aqueous solutio3n | Concentrated broth | L-lysine aqueo us solutio n | Concentrated broth | L-lysine aqueo us solutio n | Concentrated broth | L-lysine aqueo us solutio n | Concentrated broth | L-lysine aqueo us solutio n | Concentrated broth | L-lysine aqueo us solutio n | Concentrated broth |
| | 100 | 0 | 90 | 10 | 80 | 20 | 70 | 30 | 60 | 40 | 55 | 45 |
| Moisture content after 1 week (%) | 11.2 | | 10.3 | | 10.4 | | 10.1 | | 10.1 | | 10.2 | |
| The degree of lumping and caking after 1 week | 99 | | 97 | | 98 | | 96 | | 97 | | 95 | |

As shown in Tables 5 and 6, the moisture content and the degree of lumping and caking of the granules of Examples 1 to 6 were significantly low compared to those of the granules of Comparative Examples 1 to 6. In particular, in the case of using the L-lysine aqueous solution only (Comparative Example 1), it was confirmed that the highest hygroscopicity was resulted. Also, based on the fact that the hygroscopicity of the granules increased as the proportion of the L-lysine aqueous solution increased in the compositions of Comparative Examples 1 to 6, the polarity of the purified L-lysine was found to increase the hygroscopicity of the granule. Meanwhile, it was also confirmed that, in the granules of Examples 1 to 6, the moisture content and the degree of lumping and caking increased as the proportion of the neutralized L-lysine aqueous solution decreased. That is, as the proportion of $HCO_3^-$ increased in the granule, the polarity of the L-lysine was alleviated, thereby improving the hygroscopicity of the granule. In particular, when the molar ratio of $HCO_3^-$/L-lysine in the granule decreased to 0.1 or less, the solidification significantly increased. In this regard, it was confirmed that, to solve problems of the solidification, the molar ratio of $HCO_3^-$/L-lysine was set to be greater than 0.1.

Therefore, it was confirmed that, when the molar ratio of $HCO_3^-$ in the granule was greater than 0.1 and equal to or less than 0.52 in the compositions of Examples 1 to 6, the hygroscopicity of the granules may be alleviated, and accordingly that the lumping and caking phenomena caused by the hygroscopicity may be also alleviated.

**Claims**

1. A granular feed additive comprising a basic amino acid and an anion represented by Formula 1 below, wherein a molar ratio of the anion to the basic amino acid is greater than 0.1 and equal to or less than 0.52:

   [Formlua 1] $\qquad$ $H_nCO_3^{(2-n)-}$

   (wherein, in Formula 1, n is 0 or 1)

2. The granular feed additive of claim 1, wherein the basic amino acid is one or more selected from the group consisting of lysine, arginine, and histidine.

3. The granular feed additive of claim 1, wherein an average diameter of granules of the granular feed additive is from 0.1 to 3.0 mm.

4. The granular feed additive of claim 1, wherein a pH of the granular feed additive is from 8.5 to 9.5.

5. The granular feed additive of claim 1, wherein a moisture content of the granular feed additive is less than 7 weight% based on a total weight of the granular feed additive.

6. The granular feed additive of claim 1, wherein a content of the basic amino acid is from 50 weight% to 90 weight% based on a total weight of the granular feed additive.

[FIG.1]

## INTERNATIONAL SEARCH REPORT

| International application No. |
| --- |
| **PCT/KR2018/015539** |

### A. CLASSIFICATION OF SUBJECT MATTER

*A23K 20/142(2016.01)i, A23K 40/10(2016.01)i*

According to International Patent Classification (IPC) or to both national classification and IPC

### B. FIELDS SEARCHED

Minimum documentation searched (classification system followed by classification symbols)
A23K 20/142; A23K 1/16; A23K 1/175; A23K 1/18; A23K 40/10

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: feed additive, feed, amino acid, lysine, lysin, amino acid, granule, granular, feed supplement, additives, bicarbonate, carbonic acid

### C. DOCUMENTS CONSIDERED TO BE RELEVANT

| Category* | Citation of document, with indication, where appropriate, of the relevant passages | Relevant to claim No. |
| --- | --- | --- |
| X | KR 10-0389974 B1 (AJINOMOTO CO., INC.) 29 September 2003<br>See claims 1, 2, 5, 6; example 1; and page 5. | 1-6 |
| X | JP 09-172979 A (AJINOMOTO CO., INC.) 08 July 1997<br>See claims 1, 7, 11, 13, 15-16; and example 1. | 1-6 |
| A | KR 10-1996-0703320 A (HER MAJESTY THE QUEEN IN RIGHT OF CANADA, AS REPRESENTED BY THE DEPARTMENT OF AGRICULTURE AND AGRI-FOOD CANADA) 17 August 1996<br>See the entire document. | 1-6 |
| A | KR 10-2016-0057462 A (EVONIK DEGUSSA GMBH.) 23 May 2016<br>See the entire document. | 1-6 |
| A | KR 10-2014-0033097 A (GRASP INDÚSTRIA E COMÉRCIO LTDA.) 17 March 2014<br>See the entire document. | 1-6 |

| ☐ Further documents are listed in the continuation of Box C. | ☒ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 SEPTEMBER 2019 (06.09.2019) | **06 SEPTEMBER 2019 (06.09.2019)** |

| Name and mailing address of the ISA/KR | Authorized officer |
| --- | --- |
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/015539**

| Patent document cited in search report | Publication date | Patent family member | Publication date |
|---|---|---|---|
| KR 10-0389974 B1 | 29/09/2003 | AU 5213396 A | 28/11/1996 |
| | | AU 706285 B2 | 10/06/1999 |
| | | BR 9602297 A | 13/01/1998 |
| | | CA 2176841 A1 | 17/11/1996 |
| | | CA 2176841 C | 24/07/2007 |
| | | CN 1082793 C | 17/04/2002 |
| | | CN 1140555 A | 22/01/1997 |
| | | DE 69618071 T2 | 29/08/2002 |
| | | EP 0743016 A1 | 20/11/1996 |
| | | EP 0743016 B1 | 19/12/2001 |
| | | ES 2167484 T3 | 16/05/2002 |
| | | HU 220158 B | 28/11/2001 |
| | | HU 9601303 A2 | 28/05/1997 |
| | | HU 9601303 A3 | 28/03/2000 |
| | | JP 09-028310 A | 04/02/1997 |
| | | KR 10-1996-0040176 A | 17/12/1996 |
| | | SK 282763 B6 | 03/12/2002 |
| | | SK 61596 A3 | 04/12/1996 |
| | | TW 398960 B | 21/07/2000 |
| | | US 5935635 A | 10/08/1999 |
| | | ZA 9603693 B | 20/11/1996 |
| JP 09-172979 A | 08/07/1997 | AR 004892 A1 | 10/03/1999 |
| | | AR 005199 A1 | 14/04/1999 |
| | | AT 238692 T | 15/05/2003 |
| | | AU 703961 B2 | 01/04/1999 |
| | | AU 706427 B2 | 17/06/1999 |
| | | AU 718456 B2 | 13/04/2000 |
| | | AU 7419096 A | 12/06/1997 |
| | | AU 7425496 A | 26/06/1997 |
| | | AU 7644496 A | 03/07/1997 |
| | | BR 9605861 A | 25/08/1998 |
| | | BR 9606096 A | 03/11/1998 |
| | | CA 2192378 A1 | 08/06/1997 |
| | | CA 2193176 A1 | 23/06/1997 |
| | | CA 2193586 A1 | 28/06/1997 |
| | | CA 2193586 C | 20/04/2004 |
| | | CN 1093746 C | 06/11/2002 |
| | | CN 1102348 C | 05/03/2003 |
| | | CN 1156554 A | 13/08/1997 |
| | | CN 1159291 A | 17/09/1997 |
| | | CN 1161156 A | 08/10/1997 |
| | | CN 1173293 A | 18/02/1998 |
| | | CZ 359296 A3 | 11/06/1997 |
| | | DE 69530597 T2 | 13/11/2003 |
| | | DE 69630007 T2 | 10/03/2005 |
| | | EP 0777975 B1 | 02/05/2003 |
| | | EP 0781512 A1 | 11/06/1997 |
| | | EP 0781512 A2 | 02/07/1997 |

Form PCT/ISA/210 (patent family annex) (January 2015)

| | | International application No. |
|---|---|---|
| | | **PCT/KR2018/015539** |

| Patent document cited in search report | Publication date | Patent family member | Publication date |
|---|---|---|---|
| | | EP 0781512 A3 | 08/09/1999 |
| | | EP 0781512 B1 | 17/09/2003 |
| | | EP 0782916 A2 | 09/07/1997 |
| | | EP 0782916 A3 | 20/08/1997 |
| | | ES 2198432 T3 | 01/02/2004 |
| | | FI 964874 A | 08/06/1997 |
| | | HU 9603369 A2 | 29/09/1997 |
| | | HU 9603369 A3 | 02/03/1998 |
| | | ID 16008 A | 28/08/1997 |
| | | IL 119747 A | 28/10/1999 |
| | | JP 09-173027 A | 08/08/1997 |
| | | JP 09-182662 A | 15/07/1997 |
| | | JP 09-234001 A | 09/09/1997 |
| | | JP 3711549 B2 | 02/11/2005 |
| | | KR 10-0407079 B1 | 26/03/2004 |
| | | KR 10-1997-0032430 A | 22/07/1997 |
| | | KR 10-1997-0032437 A | 22/07/1997 |
| | | KR 10-1997-0032440 A | 22/07/1997 |
| | | KR 10-1997-0032463 A | 22/07/1997 |
| | | MA 9606587 A | 28/06/1997 |
| | | MX 9606122 A | 30/08/1997 |
| | | NO 965216 L | 09/06/1997 |
| | | NZ 299874 A | 24/11/1997 |
| | | NZ 299915 A | 26/06/1998 |
| | | NZ 314000 A | 28/07/1998 |
| | | PL 317342 A1 | 09/06/1997 |
| | | PT 777975 E | 30/09/2003 |
| | | TW 425270 B | 11/03/2001 |
| | | US 5741533 A | 21/04/1998 |
| | | US 5744178 A | 28/04/1998 |
| | | US 5922374 A | 13/07/1999 |
| | | US 6117464 A | 12/09/2000 |
| | | ZA 9610249 B | 05/06/1998 |
| KR 10-1996-0703320 A | 17/08/1996 | AT 213389 T | 15/03/2002 |
| | | AU 692784 B2 | 18/06/1998 |
| | | AU 7118894 A | 24/01/1995 |
| | | CN 1136763 A | 26/11/1996 |
| | | DE 69429920 T2 | 14/11/2002 |
| | | EP 0711117 A1 | 15/05/1996 |
| | | EP 0711117 B1 | 20/02/2002 |
| | | JP 09-506502 A | 30/06/1997 |
| | | KR 10-0374084 B1 | 12/05/2003 |
| | | NZ 268322 A | 27/07/1997 |
| | | US 5505968 A | 09/04/1996 |
| | | US 5728675 A | 17/03/1998 |
| | | WO 95-01103 A1 | 12/01/1995 |
| KR 10-2016-0057462 A | 23/05/2016 | AU 2014-323260 A1 | 07/04/2016 |
| | | CN 105555147 A | 04/05/2016 |

Form PCT/ISA/210 (patent family annex) (January 2015)

INTERNATIONAL SEARCH REPORT
Information on patent family members

International application No.

**PCT/KR2018/015539**

| Patent document cited in search report | Publication date | Patent family member | Publication date |
|---|---|---|---|
| | | EP 3046424 A1 | 27/07/2016 |
| | | MX 2016003329 A | 11/07/2016 |
| | | RU 2016114480 A | 23/10/2017 |
| | | US 2016-0227816 A1 | 11/08/2016 |
| | | WO 2015-039939 A1 | 26/03/2015 |
| | | ZA 201602424 B | 29/11/2017 |
| KR 10-2014-0033097 A | 17/03/2014 | AR 086529 A1 | 18/12/2013 |
| | | AU 2012-260375 A1 | 31/10/2013 |
| | | BR PI1102284 A2 | 05/11/2013 |
| | | CA 2832671 A1 | 29/11/2012 |
| | | CN 103547168 A | 29/01/2014 |
| | | EP 2713768 A1 | 09/04/2014 |
| | | JP 2014-515265 A | 30/06/2014 |
| | | MX 2013012715 A | 28/05/2014 |
| | | RU 2013-147092 A | 27/06/2015 |
| | | US 2014-0099406 A1 | 10/04/2014 |
| | | US 2016-0165928 A1 | 16/06/2016 |
| | | UY 34091 A | 03/01/2013 |
| | | WO 2012-159186 A1 | 29/11/2012 |
| | | ZA 201308009 B | 27/08/2014 |

Form PCT/ISA/210 (patent family annex) (January 2015)